## Europäisches Patentamt
## European Patent Office
## Office européen des brevets

(19)

(11) Numéro de publication: **0 162 493**
**B1**

(12) # FASCICULE DE BREVET EUROPÉEN

(45) Date de publication du fascicule du brevet:
03.02.88

(51) Int. Cl.⁴: **G 02 B 23/12,** G 02 B 6/06

(21) Numéro de dépôt: **85200542.0**

(22) Date de dépôt: **09.04.85**

(54) **Lunette à deux grossissements.**

(30) Priorité: **17.04.84 FR 8406058**

(43) Date de publication de la demande:
**27.11.85 Bulletin 85/48**

(45) Mention de la délivrance du brevet:
**03.02.88 Bulletin 88/5**

(84) Etats contractants désignés:
**DE FR GB NL**

(56) Documents cité:
**EP-A-0 025 398**
**DE-A-2 046 416**
**US-A-3 803 407**
**US-A-4 037 921**

ELECTRONIC ENGINEERING, vol. 52, no. 637, avril
1980, page 9; "Fibreye: non-linear control"
TOUTE L'ELECTRONIQUE, no. 478, novembre 1982,
page 10, Paris, FR; M. LEMONIER et al.: "Imagerie
à bas niveau de lumière par CCD"
OPTICAL ENGINEERING, vol. 20, no. 1,
janvier/fevrier 1981, pages 95-97, Bellingham,
Washington, US; R.Y. WONG et al.: "Optical
system with fiber optical elements"

(73) Titulaire: **TELECOMMUNICATIONS
RADIOELECTRIQUES ET TELEPHONIQUES T.R.T.,
88, rue Brillat Savarin, F-75013 Paris (FR)**

(84) Etats contractants désignés: **FR**

(73) Titulaire: **N.V. Philips' Gloeilampenfabrieken,
Groenewoudseweg 1, NL- 5621 BA Eindhoven (NL)**

(84) Etats contractants désignés: **DE GB NL**

(72) Inventeur: **Loy, Fernand René, Societe Civile
S.P.I.D. 209 rue de l'Université, F-75007 Paris (FR)**

(74) Mandataire: **Chaffraix, Jean, Société Civile
S.P.I.D. 209, rue de l'Université, F-75007 Paris (FR)**

## Description

L'invention concerne une lunette à deux grossissements comportant un objectif, et un oculaire.

Si un tube intensificateur est entreposé entre l'objectif et l'oculaire, on réalise une lunette intensificatrice utilisée pour l'observation à bas niveau de lumière.

Ce type de lunette n'a généralement qu'un seul champ et qu'un seul grossissement servant à la fois pour la détection et la reconnaissance. Une importante amélioration serait l'adjonction d'un champ supplémentaire plus étroit qui permettrait d'améliorer la portée de reconnaissance.

Il serait possible d'obtenir ce résultat en utilisant un objectif à deux distances focales ou un zoom mmais ce n'est pas simple sans augmentation très sensible de la masse et du prix de l'équipement car l'objectif a une très grande ouverture de l'ordre de F/1,2.

Le but de l'invention est de réaliser une lunette à deux grossissements dont la masse et le prix de revient sont à peine supérieurs à ceux d'une lunette classique.

A cet effet le dispositif de l'invention est caractérisé par une plaque de fibres optiques dégrossissante associée à une plaque de fibres optiques droites de même épaisseur et de grossissement un, la face d'entrée desdites plaques étant placée dans le plan focal dudit objectif et la face de sortie étant placée directement ou indirectement, dans le plan focal dudit oculaire.

La description suivante en regard des dessins annexés, le tout donné à titre d'exemple fera bien comprendre comment l'invention peut être réalisée.

La figure 1 montre le schéma d'une lunette intensificatrice à deux grossissements conforme à l'invention.

La figure 2 représente le champ vu dans l'oculaire pour la disposition concentrique des plaques de fibres optiques selon le schéma de la figure 1.

La figure 3b montre le champ vu dans l'oculaire pour la disposition superposée des plaques de fibres optiques représentée sur la figure 3a.

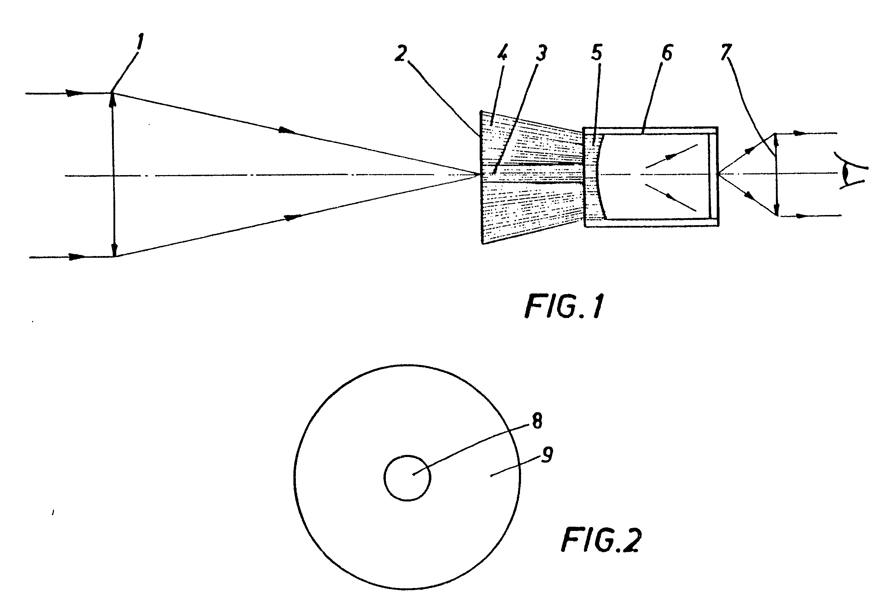

La lunette intensificatrice schématisée sur la figure 1 comporte dans sa partie classique un objectif 1 à grande ouverture, un tube intensificateur 6 ayant son entrée 5 sur fibres optiques et un oculaire 7 focalisé sur l'écran du tube intensificateur.

Conformément à l'invention le dédoublement du champ de vision est obtenu au moyen d'une plaque de fibres optiques composée d'un faisceau de fibres droites 3 dans sa zone centrale et d'un faisceau de fibres dégrossissantes 4 de grossissement G inférieur à un dans sa zone périphérique. La face d'entrée de ladite plaque est située dans le plan focal 2 de l'objectif et la face de sortie vient au contact de l'entrée sur fibres optiques du tube intensificateur.

La figure 2 représente le champ vu dans l'oculaire. La surface centrale 8 correspond au champ transmis par la fibre 3 de grossissement un tandis que la surface périphérique 9 correspond au champ transmis par la fibre 4 de grossissement G.

Si F est la distance focale de l'objectif 1 et D son diamètre, son ouverture numérique est $N = \frac{F}{D}$.

Dans le champ 8, l'ensemble optique composé de l'objectif 1 et de la fibre 3 a la même ouverture numérique que l'objectif seul, soit N.

Dans le champ 9, l'ensemble optique composé de l'objectif 1 et de la fibre 4 a une ouverture NG < N puisque G < 1. Comme le diamètre D de l'objectif 1 est inchangé, l'ensemble objectif 1 et fibre 4 a une distance focale FG < F.

Par rapport à un système classique de distance focale $F_0$, de diamètre de pupille $D_0$ et d'ouverture $N_0 = \frac{F_0}{D_0}$, une lunette intensificatrice à deux grossissements conforme au schéma de la figure 1 et ayant un objectif de même diamètre $D_0$ présente une distance focale dans le champ 9 de $F = F_0G$. Il s'ensuit que $\frac{F}{D_0} < \frac{F_0}{D_0}$, c'est-à-dire $N < N_0$, donc les performances de la lunette sont meilleures. Il en est de même dans le champ 8 puisque dans cette zone à champ réduit on a une valeur du grossissement égale à celle dudit système classique ($N = N_0$).

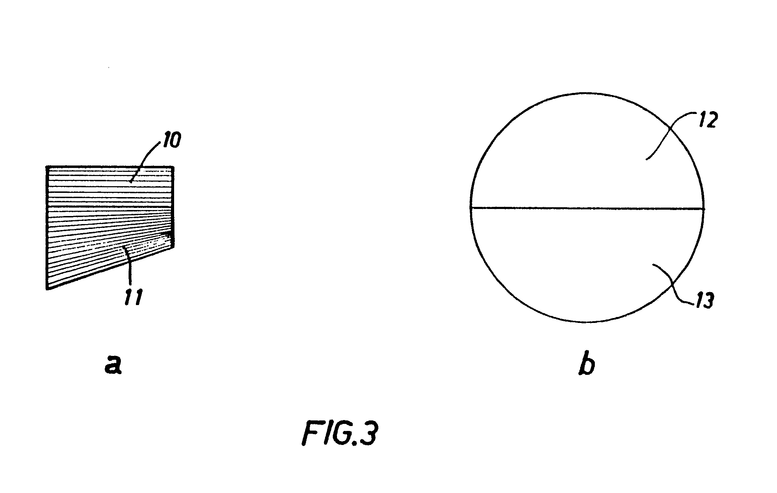

La figure 3a montre une autre disposition des deux types de fibres optiques dans la même plaque: le faisceau de fibres droites 10 et le faisceau de fibres dégrossissantes 11 sont situés de part et d'autre d'un même plan contenant l'axe optique de la lunette.

Les champs superposés correspondants 12 et 13 vus dans l'oculaire sont représentés sur la figure 3b.

On peut aussi imaginer que l'on translate les fibres 3 et 4 de façon à ce qu'elles couvrent successivement la fenêtre d'entrée du tube intensificateur.

Ce procédé s'applique aussi bien à la télévision de jour ou à bas niveau de lumière à entrée sur fibre optique.

## Revendications

1. Lunette à deux grossissements comportant un objectif, et un oculaire, caractérisée par une plaquende fibres optiques dégrossissante associée à une plaque de fibres optiques droites de même épaisseur et de grossissement un, la face d'entrée desdites plaques étant placée dans le plan focal dudit objectif et la face de sortie étant placée directement ou indirectement, dans le plan focal dudit oculaire.

2. Lunette selon la revendication 1, caractérisée en ce que lesdites plaques associées de fibres optiques sont disposées tout autour de l'axe optique de la lunette, de façon que les champs qui leur correspondent soient concentriques.

3. Lunette selon la revendication 1, caractérisée en ce que lesdites plaques associées de fibres optiques sont disposées de part et d'autre d'un même plan contenant l'axe optique de la lunette, de façon que les champs qui leur correspondent soient superposés.

4. Lunette selon la revendication 1, caractérisée en ce que l'on translate ladite plaque de fibres optiques dégrossissantes et ladite plaque de fibres optiques droites de façon à ce qu'elles couvrent successivement la fenêtre d'entrée de l'oculaire.

5. Lunette selon l'une des revendications 1 à 4, caractérisée en ce qu'un tube intensificateur à entrée sur fibres optiques est interposé entre lesdites plaques associées de fibres optiques et ledit oculaire pour réaliser une lunette intensificatrice à deux grossissements, la face de sortie desdites plaques associées venant au contact de ladite entrée du tube intensificateur.

6. Lunette intensificatrice selon la revendication 5, caractérisée en ce qu'elle est appliquée à la télévision de jour ou à bas niveau de lumière à entrée sur fibre optique.


## Patentansprüche

1. Fernrohr mit zwei vergrösserungen, das ein Objektiv und ein Okular enthält, gekennzeichnet, durch eine sich verjüngende Optikfaserplatte und eine Platte mit gerade verlaufenden Optikfasern gleicher Dicke und mit der Vergrösserung eins, wobei die Eingangsflächen dieser Platten in der Brennebene des Objetivs und die Ausgangsfläche direkt oder indirekt in der Brennebene des Okulars angeordnet werden.

2. Fernrohr nach Anspruch 1, dadurch gekennzeichnet, dass die zwei Optikfaserplatten derart um die optische Achse des Fernrohrs gruppiert sind, dass die damit übereinstimmenden Felder konzentrisch verlaufen.

3. Fernrohr nach Anspruch 1, dadurch gekennzeichnet, dass die zwei Optikfaserplatten derart in Bezug aufneine die optischen Achse des Fernrohrs enthaltende Ebene angeordnet sind, dass die damit übereinstimmenden Felder nebeneinander liegen.

4. Fernrohr nach Anspruch 1, dadurch gekennzeichnet, dass die sich verjüngende Optikfaserplatte und die Platte mit den geraden Optikfasern derart transliert werden, dass sie aufeinanderfolgend das Eintrittsfenster des Okulars bedecken.

5. Fernrohr nach einem der Ansprüche 1 bis 4, dadurch gekennzeichnet, dass eine Verstärkerröhre mit einem Optikfasereingang zwiechen den Optikfaserplatten und dem Okular zur Verwirklichung eines Fernrohrs mit zwei Vergrösserungen angeordnet ist, wobei die Ausgangsfläche der genannten Platten sich mit dem genannten Eingang der Verstärkerröhre berührt.

6. Verstärkersfernrohr nach Anspruch 5, dadurch gekennzeichnet, dass das Fernrohr beim Fernsehen unter Tageslicht Verhältnissen oder bei schwachen Lichtverhältnissen mit Optikfasereingang verwendet wird.


## Claims

1. A dual-magnification telescope comprising an objective and an eyepiece, characterized by a tapered optical-fibre array associated with a straight optical-fibre array having the same thickness and unity magnification, the input faces of said arrays being situated in the focal plane of said objective and the output face being situated directly or indirectly in the focal plane of said eyepiece.

2. A telescope as claimed in Claim 1, characterized in that said associated optical-fibre arrays are disposed around the optical axie of the telescope in such a way that the fields of view corresponding to said arrays are concentric.

3. A telescope as claimed in Claim 1, caracterized in that said associated optical-fibre arrays are each disposed to opposite sides of one plane containing the optical axis of the telescope, in such a way that the fiels of view corresponding to said arrays are superimposed.

4. A telescope as claimed in Claim 1, characterized in that said tapered optical-fibre array are translated in such a way that they successively cover the input window of the eyepiece.

5. A telescope as claimed in any one of the Claims 1 to 4, characterized in that an intensifier tube with optical-fibre input is interposed between said associated optical-fibre arrays and said eyepiece to form a dual-magnification intensifier telescope, the output face of said arrays being in contact with said input of the intensifier tube.

6. An intensifier telescope ae claimed in Claim 5, characterized in that it is employed in daylight television or low-light-level televieion with optical-fibre input.

FIG.1

FIG.2

0 162 493

_FIG.3_